# EUROPÄISCHE PATENTSCHRIFT

(11) **EP 0 807 042 B1**
(45) Veröffentlichungstag und Bekanntmachung des Hinweises auf die Patenterteilung: **24.05.2000**
(21) Anmeldenummer: 96901777.1
(22) Anmeldetag: 30.01.1996
(51) Int. Cl.: B60T 11/16, B60T 11/232

(54) **GEBERZYLINDER**
MASTER CYLINDER
MAITRE-CYLINDRE

(30) Priorität: 02.02.1995 DE 19503304; 07.06.1995 DE 19520682
(43) Veröffentlichungstag der Anmeldung: 19.11.1997
(73) Patentinhaber: Continental Teves AG & Co. oHG, 60488 Frankfurt (DE)
(72) Erfinder: KREH, Heinrich, D-61197 Florstadt (DE); KÖNIG, Harald, D-61239 Ober-Mörlen (DE)
(86) Internationale Anmeldenummer: EP9600352
(87) Internationale Veröffentlichungsnummer: WO9623683

(56) Entgegenhaltungen:
- FR-A- 2 327 896
- US-A- 2 396 155
- US-A- 5 251 446

## Beschreibung

Die vorliegende Erfindung befaßt sich mit einem Geberzylinder, insbesondere für eine hydraulische Kraftfahrzeugbremsanlage, nach dem Oberbegriff des Anspruchs 1.

Ein derartiger Geberzylinder ist aus der FR 2 327 896 A1 bekannt. Der Geberzylinder besitzt ein Gehäuse mit einem gehäusefesten Dichtelement sowie einem in dem Gehäuse verschiebbar angeordneten Kolben, so daß ein Druckraum in dem Gehäuse abgegrenzt ist. Ferner verfügt der Kolben über eine am Umfang umlaufende Nut, in die am Umfang verteilt mehrere Querbohrungen mit kreisförmigem Querschnitt einmünden, wodurch eine Verbindung zu einem drucklosen Nachlaufraum bereitgestellt wird.

Der bekannte Geberzylinder ist mit dem Nachteil behaftet, daß ein hoher Volumenstrom aus dem Nachlaufraum in den Druckraum nur durch eine große Anzahl von Querbohrungen bewirkt werden kann, welche grundsätzlich auch sorgfältig entgratet werden müssen, damit eine Beschädigung oder Zerstörung des Dichtelementes ausgeschlossen werden kann, wenn der Kolben mit der Querbohrungen das Dichtelement überfährt.

Eine große Bohrung würde zwar einen großen Volumenfluß ermöglichen, aber auch die Gefahr der Zerstörung des Dichtelements erhöhen und einen großen Leerweg bedingen, insbesondere weil sich der zu entgratende Bohrungsrand nach radial außen in Richtung Dichtelement verschiebt.

Aufgabe der vorliegenden Erfindung ist es daher, einen gattungsgemäßen Tandemhauptzylinder vorzuschlagen, bei dem ein hoher Volumenstrom durch die Querbohrungen ermöglicht wird, ohne die Gefahr der Zerstörung des Dichtelements zu erhöhen.

Diese Aufgabe wird erfindungsgemäß zusammen mit den kennzeichnenden Merkmalen des Patentanspruchs 1 gelöst.

Erfindungsgemäß ist die Querbohrung schlitzförmig ausgebildet. Ein wesentlicher Vorteil der Erfindung geht damit einher, daß es die Schlitzform ermöglicht, bei geringer Beschädigungsgefahr einen großen Volumenstrom durch die Querbohrung hindurchzuführen, weil wesentliche Teile des zu entgratenden Bohrungsrandes nach radial innen verschoben, also von dem Dichtungselement entfernt angeordnet sind. Eine schlitzförmige Querbohrung ist einfach durch Stanzen oder spritztechnisch herstellbar. Möglich sind auch Querbohrungen mit beispielsweise ovalem Querschnitt.

Vorteilhafte Ausführungsformen der Erfindung gehen aus Unteransprüchen im Zusammenhang mit der Beschreibung und der Zeichnung hervor.

Besonders einfach herstellbar ist eine symmetrisch umlaufende Nut. Eine derartige Nut bietet zudem eine größtmögliche Erweiterung des Strömungsmittelquerschnitts und damit eine niedrige Fließgeschwindigkeit des Hydaulikmediums bei hohem Volumenstrom.

Eine geringfügige Neigung der Seitenflächen der Nut bezüglich der Außenfläche des Kolbens bewirkt eine geringe Beeinträchtigung des Dichtelements beim Überfahren desselben durch die Nut. Dabei hat sich eine Neigung von etwa 30° als besonders geeignet herausgestellt, da die Seitenflächen in diesem Fall ausreichend flach, d.h. der Übergang ausreichend sanft ist und gleichzeitig ein ausreichend großer Strömungsmittelquerschnitt erzielt wird. Ebenfalls gute Eigenschaften werden aber auch bei einer Abweichung von diesem Wert um ± 15° erzielt.

Als besonders vorteilhaft hat es sich dabei herausgestellt, den Querschnitt der Nut in Form eines V auszubilden, dessen Schenkel in einem stumpfen Winkel zueinander stehen. Hierbei werden sowohl gute Eigenschaften als auch eine einfache Herstellung erzielt.

Die durch die Erfindung erzielte Querschnittserweiterung ermöglicht es, mit einer geringen Anzahl von Querbohrungen mit jeweils entsprechend großem Querschnitt auszukommen. Der Querschnitt der Querbohrung kann groß sein, da an deren Mündung an der Außenseite des Kolbens durch die erfindungsgemäße Nut keine Beeinträchtigung des Dichtelements hervorgerufen wird. Besonders einfach herzustellen sind dabei zwei, vorzugsweise auf einer Achse liegende Querbohrungen, die beispielsweise durch Bohren in einem Arbeitsgang hergestellt werden können. Auch vier Bohrungen haben diesen Vorteil. Noch einfacher ist es, eine einzige Querbohrung herzustellen.

Ist der Nachlaufraum in einem den Kolben führenden Führungselement ausgebildet, so weist dieses erfindungsgemäß kolbenseitig radiale Ausnehmungen auf, die in Umfangsrichtung durch mindestens einen Steg voneinander getrennt sind. Der Kolben kann dabei direkt am Steg anliegen, was eine besonders gute Führung trotz der partiellen Ausnehmungen im Führungselement ermöglicht. Die Ausnehmungen stehen in der zurückgestellten Position des Kolbens mit der erfindungsgemäßen Nut in Verbindung und ermöglichen so eine Druckmittelverbindung vom Druckraum zum Nachlaufraum unabhängig von der jeweiligen Winkelstellung des Kolbens bezüglich der Geberzylinderachse. Eine Festlegung dieser Winkelorientierung ist somit nicht erforderlich. Durch die Tiefe der Ausnehmungen kann ein ausreichender Strömungsquerschnitt gewährleistet werden. Dabei ist zumindest eine Ausnehmung und ein Steg, der dann fast umlaufend ist, vorgesehen oder entsprechend zwei oder mehrere Ausnehmungen, die durch zwei oder mehrere Stege voneinander getrennt sind.

Erstreckt sich die Ausnehmung axial bis zu einem an dem Führungselement anliegenden Dichtelement so kann letzteres dadurch mit Hydraulikmedium benetzt werden. Insbesondere wenn das Dichtelement an den Außenraum angrenzt, wird dessen Haltbarkeit durch diese Benetzung erhöht.

Weitere Vorteile der Erfindung ergeben sich aus der nachfolgenden Beschreibung anhand der Zeichnungen. Dabei zeigen:
- Fig. 1: einen erfindungsgemäßen Geberzylinder im Querschnitt,
- Fig. 2a, 2b: vergrößerte Ausschnitte aus Fig. 1 im Bereich des linken Führungselements
- Fig. 3a, 3b: vergrößerte Ausschnitte aus Fig. 1 im Bereich des rechten Führungselements.

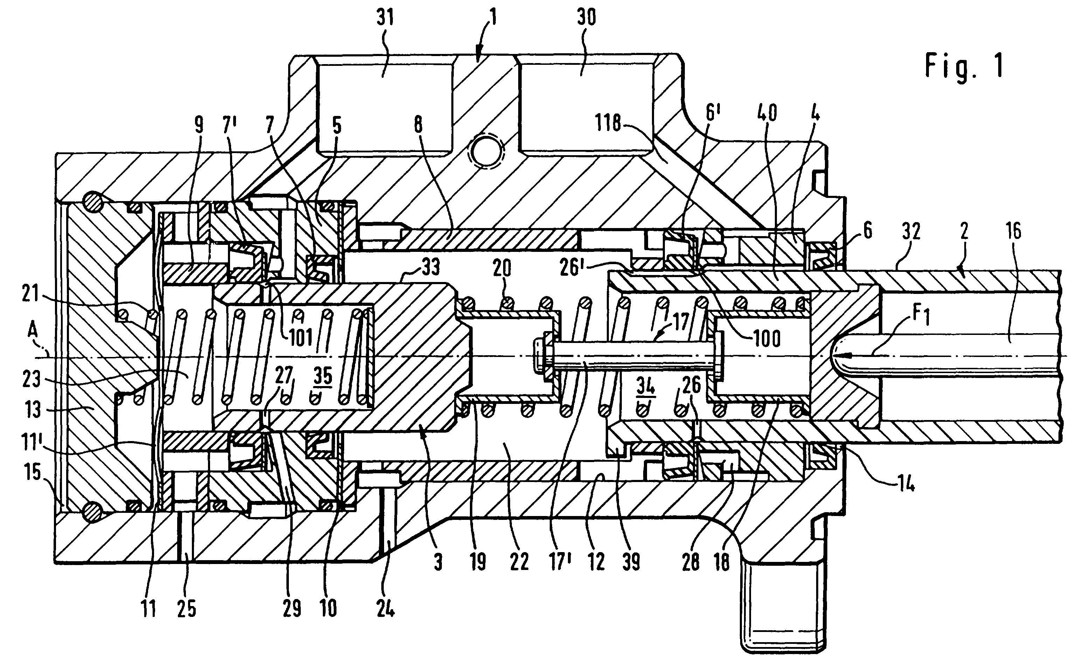

Der Geberzylinder 1 der Figur 1 ist als Tandem-Hauptzylinder einer Kraftfahrzeugbremsanlage mit zwei Kolben 2,3 versehen. Die Kolben 2,3 sind in entsprechenden Führungselementen 4,5 geführt und mittels Dichtelementen 6,6' bzw. 7,7' abgedichtet.

Die Dichtelemente 6,6' werden durch das Führungselement 4 sowie eine Hülse 8 axial positioniert. Die Dichtelemente 7,7' werden durch das Führungselement 5 sowie eine Buchse 9 axial fixiert. Zwischen Hülse 8 und Führungselement 5 ist eine Ausgleichsscheibe 10 angeordnet, die ebenfalls zur axialen Fixierung des Dichtelements 7 beiträgt.

Eine Ausgleichsscheibe 11 ist zwischen Buchse 9 und einem Verschlußdeckel 13 angeordnet. Die Ausgleichsscheibe 11 weist Federabschnitte 11' auf, die sich gegen den Verschlußdeckel 13 abstützen und die Buchse 9 gegen das Führungselement 5 drücken, und somit einen Ausgleich für gegebenenfalls geringfügig abweichende relative axiale Positionen von Verschlußdeckel 13 bezüglich der Buchse 9 bzw. dem Führungselement 7 bilden. Auch geringfügige axiale Toleranzen der einzelnen Bauteile können so ausgeglichen werden.

Der Verschlußdeckel 13 verschließt eine Öffnung 15 des Geberzylinders 1, von der aus sich eine gestufte axiale Bohrung 12 bis zu einer Öffnung 14 erstreckt. Aus der Öffnung 14 ragt ein rückwärtiger Teil des Kolbens 2 heraus. An dem Kolben 2 liegt eine Kolbenstange 16 an, mittels derer eine Betätigungskraft F₁ auf den Kolben 2 ausgeübt werden kann.

Das Kunststoffrohr 40 weist an seinem vorderen, im Druckraum 22,23 befindlichen Ende einen bzw. mehrere radiale Vorsprünge 39 auf, die an einer Stufe der Hülse 8 zur Anlage kommen können, und somit ein Herausfallen des Kolbens 2 aus dem Geberzylinder 1 verhindern.

Die Kolben 2 bzw. 3 weisen eine glatte, zylindrische Außenfläche 32 bzw. 33 auf und sind mit einem Hohlraum 34 bzw. 35 versehen. Ein zwischen den Kolben 2 und 3 angeordnetes Federpaket 17, bestehend aus Spannstift 17', Spannhülsen 18 und 19 sowie Feder 20, übt bei Verschiebung des Kolbens 2 eine Axialkraft auf den Kolben 3 aus, um diesen zu verschieben. Wirkt keine Betätigungskraft F₁ auf den Kolben 2 ein, so wird dieser durch die Kraft der Feder 20 zurückgestellt. Der Kolben 3 wird durch die Kraft der Feder 21, die sich am Verschlußdeckel 13 abstützt, zurückgestellt.

Zwischen den Kolben 2 und 3 befindet sich ein Primärdruckraum 22, zwischen Kolben 3 und Verschlußdeckel 13 befindet sich ein Sekundärdruckraum 23. Die Druckräume 22 bzw. 23 sind durch die schematisch angedeuteten Druckanschlüsse 24 bzw. 25 an unterschiedliche Bremskreise eines Kraftfahrzeugs angeschlossen.

Im zurückgestellten Zustand der Kolben 2 bzw. 3 sind die Druckräume 22 bzw. 23 über in den entsprechenden Kolben angeordnete Querbohrungen 26 bzw. 27 mit Nachlaufräumen 28 bzw. 29, die in den Führungselementen 4 bzw. 5 ausgebildet sind, verbunden. Statt einer Querbohrung 26 kann auch eine Axialnut 26' vorgesehen sein, die als Alternative in der oberhalb der gestrichelt angedeuteten Achse A des Geberzylinders 1 abgebildeten Hälfte des Kolbens 2 dargestellt ist. Die Nachlaufräume 28 bzw. 29 sind über Behälteranschlüsse 30 bzw. 31 mit einem hier nicht dargestellten drucklosen Nachlaufbehälter verbunden.

Vor einer Betätigung des Geberzylinders 1 befinden sich die Kolben 2,3 in ihrer dargestellten, zurückgesetzten Ausgangsposition. Dabei sind die Druckräume 22, 23 mit dem nicht dargestellten drucklosen Ausgleichsbehälter verbunden, das in ihnen befindliche Hydraulikmedium ist drucklos.

Zur Betätigung des Geberzylinders 1 wird eine Betätigungskraft F₁ über die Kolbenstange 16 auf den Kolben 2 ausgeübt, welcher sich dadurch in der Abbildung nach links bewegt. Durch die unter Vorspannung stehende Feder 20 des Federpakets 17 wird gleichzeitig der Kolben 3 nach links verschoben. Die Querbohrungen 26, 27 bzw. bei Vorhandensein die entsprechenden Axialnuten 26' überfahren dabei die Dichtelemente 6', 7', wodurch die hydraulische Verbindung zwischen Primärdruckraum 22 und Nachlaufraum 28 sowie zwischen Sekundärdruckraum 23 und Nachlaufraum 29 unterbrochen wird. Eine weitere Verschiebung der Kolben 2,3 nach links bewirkt eine Druckerhöhung in den Druckräumen 22,23. Hydraulikmedium wird über die Druckanschlüsse 24,25 zur Betätigung der angeschlossenen, nicht dargestellten Radbremsen ausgeschoben.

Läßt die Betätigungskraft F₁ nach, so werden die Kolben 2,3 durch den in den Druckräumen 22,23 herrschenden Druck sowie die Kraft der Federn 20, 21 nach rechts verschoben. Dabei kann erforderlichenfalls Hydraulikmedium aus den Nachlaufräumen 28, 29 über die äußere Dichtlippe der Dichtelemente 6', 7' in die entsprechenden Druckräume 22,23 nachgesaugt werden. Sobald die Kolben 2,3 ihre Ausgangsstellung eingenommen haben besteht wieder eine direkte Verbindung der Druckräume 22,23 zu den entsprechenden Nachlaufräumen 28,29 über die Querbohrungen 26,27.

Ein Zurückschieben der Kolben bzw. eines der Kolben in die entsprechende Ausgangsstellung kann auch über eine Druckerhöhung im Druckraum 22 bzw. 23 bewirkt werden.

Eine derartige Druckerhöhung kann bei der Verwendung eines erfindungsgemäßen Tandemhauptzylinders in einer geregelten Bremsanlage (ABS,ASR,Regelung der Fahrstabilität o.ä.) während einer entsprechenden Regelung auftreten.

Erfindungsgemäß münden die Querbohrungen 26,27 bzw. die Axialnut 26' in einer umlaufenden Nut 100,101. Dies ist in den nachfolgenden Figuren im vergößerten Maßstab abgebildet.

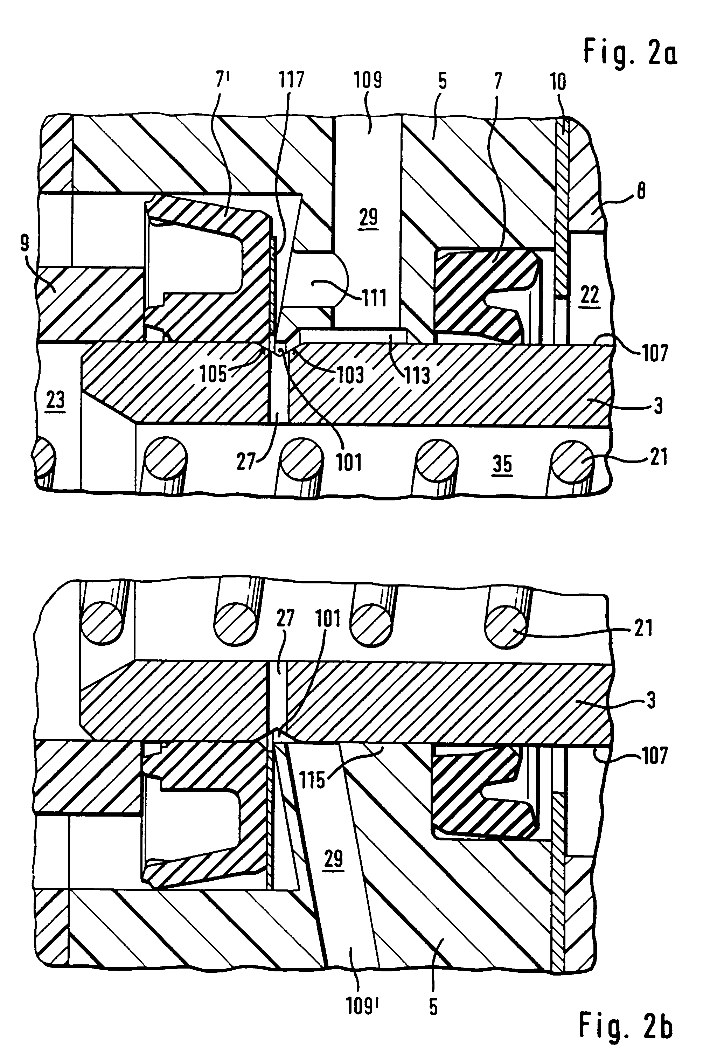

Fig. 2a zeigt einen vergrößerten Ausschnitt aus Fig. 1 im Bereich des Führungselements 5 und des oberhalb der Achse A liegenden Teils des Kolbens 3, während Fig. 2b den entsprechenden unteren Teil darstellt.

Die als Querbohrungen 27 ausgebildeten Nachlaufbohrungen verlaufen vom Hohlraum 35 des Kolbens 3 zur Nut 101. Diese weist einen V-förmigen Querschnitt auf, dessen Seitenflächen 103,105 um einen spitzen Winkel zur Kolbenaußenfläche 107 geneigt sind. In Fig. 2a wird der Nachlaufraum 29 durch eine Radialbohrung 109 und eine Axialbohrung 111 gebildet, die über eine Ausnehmung 113 mit der Nut 101 verbunden sind, wenn sich der Kolben 3 in der dargestellten, zurückgesetzten Position befindet. Die Ausnehmung 113 erstreckt sich axial nicht ganz bis an die Dichteiemente 7 bzw. 7'. Somit besteht bei nach links verschobenem Kolben 3 kein Spalt zwischen der Kolbenaußenfläche 107 und dem Führungslement 5, in den die mit dem im Druckraum 22 bzw. 23 herrschenden Druck beaufschlagten Dichtelemente 7,7' hineingepreßt werden könnten. Eine Stützscheibe 117 verhindert ein Eindringen des Dichtelements 7' in die Axialbohrung 111. Der beim Verschieben des Kolbens 3 nach links durch die Nut 101 gebildete Spalt ist von seiner Abmessung so gering, daß keine Beeinträchtigung des Dichtelements 7' auftritt.

In dem in Fig. 2b därgestellten Ausschnitt wird der Nachlaufraum durch eine im wesentlichen radial verlaufende Schrägbohrung 109' gebildet, die im Bereich der umlaufenden Nut 101 mündet, wenn der Kolben 3 in seiner zurückgestellten Position ist. Eine der Ausnehmung 113 entsprechende Ausnehmung zur Verbindung der Nut 101 mit dem Nachlaufraum 29 ist hier nicht erforderlich. In der Fig. 2b erkennt man den Steg 115, der beidseitig der Ausnehmung 113 fast vollständig umlaufend ausgebildet ist.

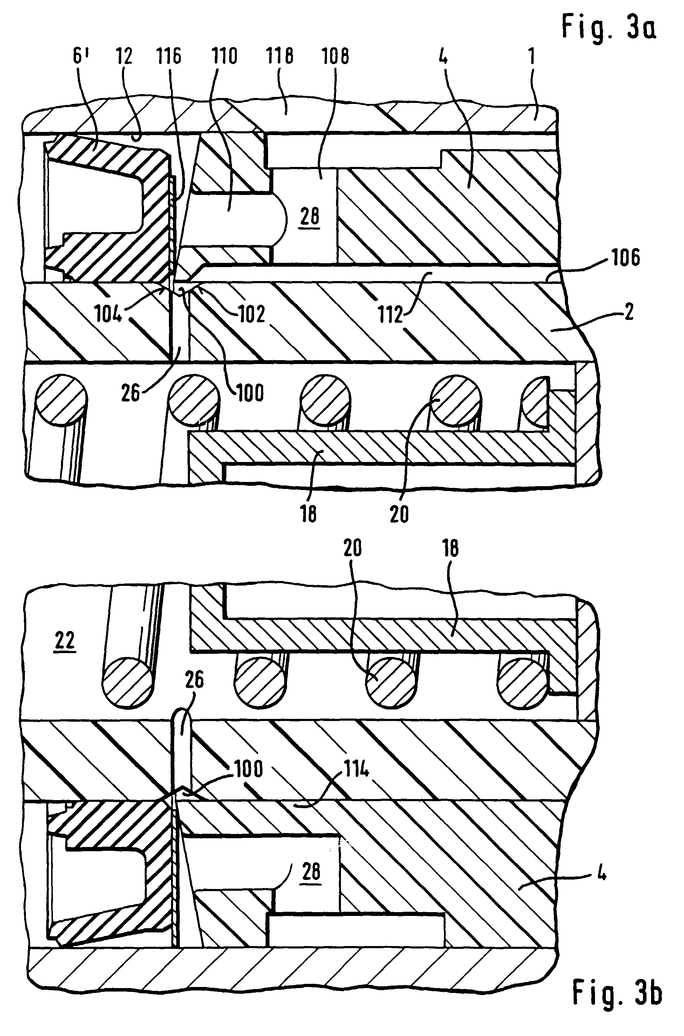

In Fig. 3a erkennt man den Bereich des Führungselements 4 sowie den Kolben 2 oberhalb der Achse A, hier allerdings mit Querbohrung 26 statt Axialnut 26' dargestellt, in Fig. 3b die entsprechende untere Hälfte. Die Querbohrungen 26 münden in die umlaufende Nut 100, deren Seitenflächen 102,104 analog zur Fig. 2a, 2b ausgebildet sind.

Der Nachlaufraum 28 wird durch eine Radialbohrung 108 und einer Axialbohrung 110 gebildet und ist über die Nachlaufbohrung 118 mit einem nicht dargestellten drucklosen Ausgleichsbehälter verbunden. Die Radialbohrung 108 mündet in einer Ausnehmung 112 des Führungselements 4, die sich vom Bereich der umlaufenden Nut 100 axial bis zum Bereich des in Fig. 3a nicht dargestellten Dichtelements 6 erstreckt, wie aus Fig. 1 ersichtlich. Sie dient zum einen der Verbindung des Nachlaufraums 28 mit der umlaufenden Nut 100 im zurückgestellten Zustand des Kolbens 2, analog wie zu Fig. 2a beschrieben, und zum anderen zur Benetzung des Dichtelements 6 mit Hydraulikmedium.

In Fig. 3b erkennt man den Steg 114 der zwischen den Ausnehmungen 112 angeordnet ist. Die umlaufende Nut 100 hat über die in diesem Schnitt nicht sichtbaren, dem Steg 114 benachbarten, Ausnehmungen 112 Verbindung zum Nachlaufraum 28.

Bei Betätigung des Kolbens 2 wird dieser nach links verschoben, wobei die Nut 100 den Bereich des Führungselements 4 verläßt und das Dichtelement 6' überfährt. Daraufhin erfolgt ein Druckaufbau im Druckraum 22, wodurch die Dichtlippen des Dichtelements 6' an die Kolbenaußenfläche 106 bzw. die gestufte Bohrung 12 angepreßt werden. Die Stützscheibe 116 wird gegen die Axialbohrung 110 gepreßt, das Dichtelement 6' liegt sicher an der Stützscheibe 116 an.

Die Verbindung zwischen Druckraum 22 und drucklosem Behälter in der in Fig. 3a dargestellten unbetätigten Kolbenendstellung wird erfindungsgemäß durch die umlaufende Nut 100 erzeugt, in die von innen mindestens eine Querbohrung 26 mündet. Die Nut 100 hat in der besagten Endstellung Verbindung zum drucklosen Behälter über die Ausnehmung 112 in dem gehäusefesten Führungslement 4 bzw. über eine an gleicher Stelle austretende Schrägbohrung analog zur Schrägbohrung 109' aus Fig. 2b. Eine Druckmittelverbindung bei zurückgestelltem Kolben 2 ist somit sichergestellt. Da druckbelastete Dichtelemente 6',7,7', insbesondere wenn sie als Manschetten ausgeführt sind, in großen Spalten durch Extrusion zerstört werden, sind die umlaufenden Nuten 100,101 als kleine Spalte ausgelegt, die dennoch einen großen Querschnitt aufweisen, da sie umlaufend ausgebildet sind. Um einen großen Verbindungsquerschnitt zu ermöglichen, ohne die Ausdehnung der Querbohrung 26 in Axialrichtung des Geberzylinders zu erhöhen, ist die Querbohrung 26 in Fig. 3b als Schlitz ausgebildet, dessen längere Achse senkrecht zur Zeichenebene angeordnet ist.

Erfindungsgemäß wird vorgeschlagen, die Querbohrungen 26 eines mit Plungerkolben 2 versehenen Geberzylinders 1 in einer in die Außenfläche 106 eingebrachten umlaufenden Nut 100 münden zu lassen.

## Patentansprüche

1. Geberzylinder (1) mit einem darin verschiebbaren Kolben (2,3) der mittels eines gehäusefest angeordneten Dichtelements (6',7') gegenüber einem Druckraum (22,23) abgedichtet ist, welcher durch zumindest eine im Kolben (2,3) ausgebildete Querbohrung (26,27) mit einem drucklosen Nachlaufraum (28,29) verbindbar ist, wobei auf der Außenfläche (106,107) des Kolbens (2,3) zumindest eine umlaufende Nut (100,101) ausgebildet ist, in die die Querbohrung (26,27) mündet, dadurch **gekennzeichnet,** daß die Querbohrung (26,27) schlitzförmig ausgebildet ist.

2. Geberzylinder nach einem der vorhergehenden Ansprüche, dadurch **gekennzeichnet,** daß die Seitenflächen (102 - 105) der Nut (100,101) nur geringfügig gegenüber der Außenfläche (106,107) des Kolbens (2,3) geneigt sind.

3. Geberzylinder nach einem der vorhergehenden Ansprüche, dadurch **gekennzeichnet,** daß die Nut (100,101) einen Querschnitt in Form eines V aufweist, dessen Schenkel in einem stumpfen Winkel zueinander stehen.

4. Geberzylinder nach einem der Ansprüche 1 bis 3, dadurch **gekennzeichnet,** daß zwei bis vier Querbohrungen (26,27) mit geeignet großem Querschnitt im Kolben (2,3) ausgebildet sind.

5. Geberzylinder nach einem der vorhergehenden Ansprüche, dadurch **gekennzeichnet,** daß der Nachlaufraum (28,29) in einem den Kolben führenden Führungselement (4,5) ausgebildet ist, welches kolbenseitig radiale Ausnehmungen (112,113) aufweist, die in Umfangsrichtung durch mindestens einen Steg (114,115) getrennt sind.

6. Geberzylinder nach Anspruch 5, dadurch **gekennzeichnet,** daß die Ausnehmung (112,113) sich axial bis zu einem an dem Führungselement (4,5) anliegenden Dichtelement (6) erstreckt.

## Claims

1. Master cylinder (1) including a piston (2, 3) movable therein, which is sealed relative to a pressure chamber (22, 23) by way of a sealing element (6', 7') fixed on the housing, the pressure chamber (22, 23) being connectable to an unpressurized supply chamber (28, 29) by at least one transverse bore (26, 27) provided in the piston (2, 3), wherein at least one circumferential groove (100, 101) is provided on the outer surface (106, 107) of the piston (2, 3) into which the transverse bore (26, 27) opens,
**characterized** in that the transverse bore (26, 27) has a slot-shaped configuration.

2. Master cylinder as claimed in any one of the preceding claims,
**characterized** in that the lateral surfaces (102 - 105) of the groove (100, 101) are inclined only slightly with respect to the outer surface (106, 107) of the piston (2, 3).

3. Master cylinder as claimed in any one of the preceding claims,
**characterized** in that the groove (100, 101) has a cross-section in the shape of a V having legs which are at an obtuse angle relative to each other.

4. Master cylinder as claimed in any one of the claims 1 to 3,
**characterized** in that two to four transverse bores (26, 27) having an appropriately large cross-section are provided in the piston (2, 3).

5. Master cylinder as claimed in any one of the preceding claims,
**characterized** in that the supply chamber (28, 29) is provided in a guide element (4, 5) in which the piston is guided, the guide element including on the piston side radial recesses (112, 113) which are separated from each other in a circumferential direction by at least one web (114, 115).

6. Master cylinder as claimed in claim 5,
**characterized** in that the recess (112, 113) extends axially up to a sealing element (6) which abuts on the guide element (4, 5).

## Revendications

1. Maître-cylindre (1) comportant un piston(2, 3) qui peut y être déplacé d'une manière coulissante et dont l'étanchéité est assurée au moyen d'un élément d'étanchéité (6', 7'), fixe par rapport au boîtier, par rapport à une chambre de pression (22, 23) qui peut communiquer avec une chambre de remplissage sans pression (28, 29) par l'intermédiaire d'au moins un perçage transversal (26, 27) ménagé dans le piston (2, 3), tandis qu'au moins une gorge (100, 101) qui fait tout le tour est ménagée sur la surface extérieure (106, 107) du piston (2, 3) et dans laquelle débouche le perçage transversal (26, 27), caractérisé en ce que le perçage transversal (26, 27) est réalisé en forme de fente.

2. Maître-cylindre suivant la revendication précédente, caractérisé en ce que les surfaces latérales (102 à 105) de la gorge (100, 101) ne sont inclinées que faiblement par rapport à la surface extérieure (106, 107) du piston (2, 3).

3. Maître-cylindre suivant l'une des revendications précédentes, caractérisé en ce que la gorge (100, 101) présente une section en forme de V dont les branches font un angle obtus l'une avec l'autre.

4. Maître-cylindre suivant l'une des revendications 1 à 3, caractérisé en ce que deux à quatre perçages transversaux (26, 27) présentant une section d'une grandeur appropriée sont ménagés dans le piston (2, 3).

5. Maître-cylindre suivant l'une des revendications précédentes, caractérisé en ce que la chambre de remplissage (28, 29) est ménagée dans un élément de guidage (4, 5) qui guide le piston et qui comporte, côté piston, des évidements radiaux (112, 113) qui sont séparés suivant la direction périphérique par au moins une partie pleine (114, 115).

6. Maître-cylindre suivant la revendication 5, caractérisé en ce que l'évidement (112, 113) s'étend axialement jusqu'à un élément d'étanchéité (6) adjacent à l'élément de guidage (4, 5).
